# EUROPEAN PATENT SPECIFICATION

(11) **EP 3 222 102 B1**
(45) Date of publication and mention of the grant of the patent: **26.05.2021**
(21) Application number: 15801084.3
(22) Date of filing: 16.11.2015
(51) Int. Cl.: H04W 74/08

(54) **LISTEN BEFORE TALK (LBT) DESIGN FOR UPLINK LICENSED ASSISTED ACCESS (LAA) OPERATION IN UNLICENSED BAND**
ENTWURF VON LISTEN-BEFORE-TALK (LBT) FÜR UPLINK-LIZENZIERTEN UNTERSTÜTZTEN ZUGRIFF (LAA) IN EINEM UNLIZENZIERTEN BAND
CONCEPTION D'ACCÈS MULTIPLE AVEC ÉCOUTE DE PORTEUSE (LBT) POUR OPÉRATION D'ACCÈS ASSISTÉ AUTORISÉ (LAA) DANS UNE BANDE NON AUTORISÉE

(30) Priority: 17.11.2014 US 201462080913 P
(43) Date of publication of application: 27.09.2017
(60) Divisional application: 21169706.5
(73) Proprietor: Apple Inc., Cupertino, CA 95014 (US)
(72) Inventor: BHORKAR, Abhijeet, Fremont, California 94555 (US); KWON, Hwan-Joon, Santa Clara, California 95054 (US); IBARS-CASAS, Christian, Santa Clara, California 95054 (US)
(74) Representative: Barton, Russell Glen
(86) International application number: PCT/US2015/060902
(87) International publication number: WO 2016/081375

(56) References cited:
- ZTE: "Analysis of LAA UL enhancement", 3GPP DRAFT; R1-144830 ANALYSIS OF LAA UL ENHANCEMENT V2, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. San Francisco, USA; 20141117 - 20141121 8 November 2014 (2014-11-08), XP050885502, Retrieved from the Internet: URL:http://www.3gpp.org/ftp/tsg_ran/WG1_RL 1/TSGR1_79/Docs/ [retrieved on 2014-11-08]
- NTT DOCOMO: "Views on issues related to LAA UL", 3GPP DRAFT; R1-144970 VIEWS ON ISSUES RELATED TO LAA UL_FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. San Francisco, USA; 20141117 - 20141121 8 November 2014 (2014-11-08), XP050885622, Retrieved from the Internet: URL:http://www.3gpp.org/ftp/tsg_ran/WG1_RL 1/TSGR1_79/Docs/ [retrieved on 2014-11-08]
- LG ELECTRONICS: "Carrier selection and other coexistence methods", 3GPP DRAFT; R1-144901 LAA CARRIER SELECTION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. San Francisco, USA; 20141117 - 20141121 8 November 2014 (2014-11-08), XP050885563, Retrieved from the Internet: URL:http://www.3gpp.org/ftp/tsg_ran/WG1_RL 1/TSGR1_79/Docs/ [retrieved on 2014-11-08]
- INTEL CORPORATION: "Discussion on PHY layer options for LAA using LTE", 3GPP DRAFT; R1-144666-INTEL-PHY OPTIONS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. San Francisco, USA; 20141117 - 20141121 8 November 2014 (2014-11-08), XP050885367, Retrieved from the Internet: URL:http://www.3gpp.org/ftp/tsg_ran/WG1_RL 1/TSGR1_79/Docs/ [retrieved on 2014-11-08]
- HUAWEI ET AL: "Remaining aspects of existing unlicensed spectrum regulatory requirements", 3GPP DRAFT; R1-145104, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. San Francisco, USA; 20141117 - 20141121 8 November 2014 (2014-11-08), XP050885740, Retrieved from the Internet: URL:http://www.3gpp.org/ftp/tsg_ran/WG1_RL 1/TSGR1_79/Docs/ [retrieved on 2014-11-08]

## Description

### FIELD

The present disclosure relates to wireless technology, and more specifically to techniques for implementing listen before talk (LBT) in unlicensed band operation of a wireless system.

### BACKGROUND

The scarcity of licensed spectrum for cellular communications below 6 GHz has driven interest in unlicensed bands for LTE (Long Term Evolution) operation. In particular, the less crowded 5GHz bands (currently used mostly for WiFi) have been proposed for LTE deployment, offering the potential for a substantial increase in LTE throughput. Overall, the design principles for LTE-U (LTE in Unlicensed spectrum) include integration with the licensed spectrum, minimal change to the existing LTE air-interface, and guaranteed co-existence with other systems using unlicensed spectrum, such as WiFi. Recently, Licensed Assisted Access (LAA) is a new technology considered in LTE Release 13 to meet the ever increasing demand for high data rate in wireless cellular networks by utilizing the carrier aggregation feature supported in LTE-A (LTE Advanced) to combine the data transmission over licensed primary carrier and unlicensed secondary component carriers. The 5 GHz band is of current interest in 3GPP (the Third Generation Partnership Project). For fair coexistence with the incumbent systems at the 5 GHz band, such as IEEE (the Institute of Electrical and Electronics Engineers) 802.11 based wireless local area networks (WLAN), Listen-Before-Talk (LBT) is considered as a mandatory feature of Release 13 LAA system.

Listen before talk (LBT) is an important feature for co-existence in the unlicensed band, wherein a transmitter listens to detect potential interference on the channel, only transmitting in the absence of interfering signals above a given threshold. Furthermore, different regions such as Europe have regulations concerning LBT for operation in unlicensed bands. WiFi devices use Carrier sense multiple access with collision avoidance (CSMA/CA) as an LBT scheme.

In "ZTE: 'Analysis of LAA UL enhancement', 3GPP DRAFT; 8 November 2014 (2014-11-08)", an eNB is disclosed that transmits uplink scheduling grant to a UE for PUSCH transmission at the same or different timing. Further, control or triggering signals are sent to the UE. When a channel is assessed as idle, a UE performs UL transmissions of PUSCH.

In "NTT DOCOMO: 'Views on issues related to LAA UL", 3GPP DRAFT; 8 November 2014", a UE is disclosed that performs LBT for UL transmission after receiving UL grant from an eNB.

### BRIEF DESCRIPTION OF THE DRAWINGS

**FIG. 1** is a block diagram illustrating an example user equipment (UE) useable in connection with various aspects described herein.
**FIG. 2** is a block diagram of a system employable in an enhanced node B (eNB) or other base station that facilitates unlicensed band operation of one or more user equipments (UEs) according to various aspects described herein.
**FIG. 3** is a block diagram of a system employable in a UE that facilitates unlicensed band operation of the UE according to various aspects described herein.
**FIG. 4** is a flow diagram illustrating a method of facilitating unlicensed band operation of one or more UEs according to various aspects described herein.
**FIG. 5** is a flow diagram illustrating a method of facilitating uplink access in a licensed assisted access (LAA) wireless system according to various aspects described herein.
**FIG. 6** is a diagram illustrating an example operation of an uplink design in a frequency division duplexing (FDD) system according to various aspects described herein.
**FIG. 7** is a diagram illustrating an example operation of an uplink design in a time division duplexing (TDD) system according to various aspects described herein.
**FIG. 8** is a diagram illustrating operation of an uplink design in an FDD or TDD system according to various aspects described herein.
**FIG. 9** is a diagram illustrating an uplink design employing frequency multiplexing of UEs according to various aspects described herein.
**FIG. 10** is a diagram illustrating an uplink design employing code multiplexing of UEs according to various aspects described herein.
**FIG. 11** is a diagram illustrating LBT optimization in a FDD system according to various aspects described herein.
**FIG. 12** is a diagram illustrating LBT optimization in a TDD system according to various aspects described herein.

### DETAILED DESCRIPTION

The present disclosure will now be described with reference to the attached drawing figures, wherein like reference numerals are used to refer to like elements throughout, and wherein the illustrated structures and devices are not necessarily drawn to scale. As utilized herein, terms "component," "system," "interface," and the like are intended to refer to a computer-related entity, hardware, software (e.g., in execution), and/or firmware. For example, a component can be a processor (e.g., a microprocessor, a controller, or other processing device), a process running on a processor, a controller, an object, an executable, a program, a storage device, a computer, a tablet PC and/or a user equipment (e.g., mobile phone, etc.) with a processing device. By way of illustration, an application running on a server and the server can also be a component. One or more components can reside within a process, and a component can be localized on one computer and/or distributed between two or more computers. A set of elements or a set of other components can be described herein, in which the term "set" can be interpreted as "one or more."

Further, these components can execute from various computer readable storage media having various data structures stored thereon such as with a module, for example. The components can communicate via local and/or remote processes such as in accordance with a signal having one or more data packets (e.g., data from one component interacting with another component in a local system, distributed system, and/or across a network, such as, the Internet, a local area network, a wide area network, or similar network with other systems via the signal).

As another example, a component can be an apparatus with specific functionality provided by mechanical parts operated by electric or electronic circuitry, in which the electric or electronic circuitry can be operated by a software application or a firmware application executed by one or more processors. The one or more processors can be internal or external to the apparatus and can execute at least a part of the software or firmware application. As yet another example, a component can be an apparatus that provides specific functionality through electronic components without mechanical parts; the electronic components can include one or more processors therein to execute software and/or firmware that confer(s), at least in part, the functionality of the electronic components.

Use of the word exemplary is intended to present concepts in a concrete fashion. As used in this application, the term "or" is intended to mean an inclusive "or" rather than an exclusive "or". That is, unless specified otherwise, or clear from context, "X employs A or B" is intended to mean any of the natural inclusive permutations. That is, if X employs A; X employs B; or X employs both A and B, then "X employs A or B" is satisfied under any of the foregoing instances. In addition, the articles "a" and "an" as used in this application and the appended claims should generally be construed to mean "one or more" unless specified otherwise or clear from context to be directed to a singular form. Furthermore, to the extent that the terms "including", "includes", "having", "has", "with", or variants thereof are used in either the detailed description and the claims, such terms are intended to be inclusive in a manner similar to the term "comprising."

As used herein, the term "circuitry" may refer to, be part of, or include an Application Specific Integrated Circuit (ASIC), an electronic circuit, a processor (shared, dedicated, or group), and/or memory (shared, dedicated, or group) that execute one or more software or firmware programs, a combinational logic circuit, and/or other suitable hardware components that provide the described functionality. In some embodiments, the circuitry may be implemented in, or functions associated with the circuitry may be implemented by, one or more software or firmware modules. In some embodiments, circuitry may include logic, at least partially operable in hardware.

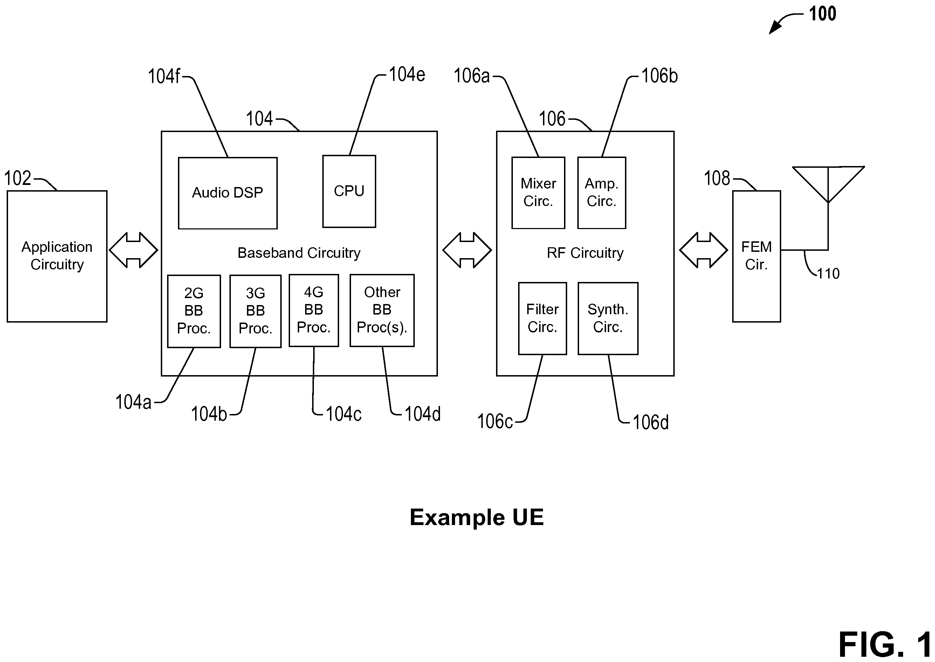

Embodiments described herein may be implemented into a system using any suitably configured hardware and/or software. **FIG. 1** illustrates, for one embodiment, example components of a User Equipment (UE) device 100. In some embodiments, the UE device 100 may include application circuitry 102, baseband circuitry 104, Radio Frequency (RF) circuitry 106, front-end module (FEM) circuitry 108 and one or more antennas 110, coupled together at least as shown.

The application circuitry 102 may include one or more application processors. For example, the application circuitry 102 may include circuitry such as, but not limited to, one or more single-core or multi-core processors. The processor(s) may include any combination of general-purpose processors and dedicated processors (e.g., graphics processors, application processors, etc.). The processors may be coupled with and/or may include memory/storage and may be configured to execute instructions stored in the memory/storage to enable various applications and/or operating systems to run on the system.

The baseband circuitry 104 may include circuitry such as, but not limited to, one or more single-core or multi-core processors. The baseband circuitry 104 may include one or more baseband processors and/or control logic to process baseband signals received from a receive signal path of the RF circuitry 106 and to generate baseband signals for a transmit signal path of the RF circuitry 106. Baseband processing circuity 104 may interface with the application circuitry 102 for generation and processing of the baseband signals and for controlling operations of the RF circuitry 106. For example, in some embodiments, the baseband circuitry 104 may include a second generation (2G) baseband processor 104a, third generation (3G) baseband processor 104b, fourth generation (4G) baseband processor 104c, and/or other baseband processor(s) 104d for other existing generations, generations in development or to be developed in the future (e.g., fifth generation (5G), 6G, etc.). The baseband circuitry 104 (e.g., one or more of baseband processors 104a-d) may handle various radio control functions that enable communication with one or more radio networks via the RF circuitry 106. The radio control functions may include, but are not limited to, signal modulation/demodulation, encoding/decoding, radio frequency shifting, etc. In some embodiments, modulation/demodulation circuitry of the baseband circuitry 104 may include Fast-Fourier Transform (FFT), precoding, and/or constellation mapping/demapping functionality. In some embodiments, encoding/decoding circuitry of the baseband circuitry 104 may include convolution, tail-biting convolution, turbo, Viterbi, and/or Low Density Parity Check (LDPC) encoder/decoder functionality. Embodiments of modulation/demodulation and encoder/decoder functionality are not limited to these examples and may include other suitable functionality in other embodiments.

In some embodiments, the baseband circuitry 104 may include elements of a protocol stack such as, for example, elements of an evolved universal terrestrial radio access network (EUTRAN) protocol including, for example, physical (PHY), media access control (MAC), radio link control (RLC), packet data convergence protocol (PDCP), and/or radio resource control (RRC) elements. A central processing unit (CPU) 104e of the baseband circuitry 104 may be configured to run elements of the protocol stack for signaling of the PHY, MAC, RLC, PDCP and/or RRC layers. In some embodiments, the baseband circuitry may include one or more audio digital signal processor(s) (DSP) 104f. The audio DSP(s) 104f may be include elements for compression/decompression and echo cancellation and may include other suitable processing elements in other embodiments. Components of the baseband circuitry may be suitably combined in a single chip, a single chipset, or disposed on a same circuit board in some embodiments. In some embodiments, some or all of the constituent components of the baseband circuitry 104 and the application circuitry 102 may be implemented together such as, for example, on a system on a chip (SOC).

In some embodiments, the baseband circuitry 104 may provide for communication compatible with one or more radio technologies. For example, in some embodiments, the baseband circuitry 104 may support communication with an evolved universal terrestrial radio access network (EUTRAN) and/or other wireless metropolitan area networks (WMAN), a wireless local area network (WLAN), a wireless personal area network (WPAN). Embodiments in which the baseband circuitry 104 is configured to support radio communications of more than one wireless protocol may be referred to as multi-mode baseband circuitry.

RF circuitry 106 may enable communication with wireless networks using modulated electromagnetic radiation through a non-solid medium. In various embodiments, the RF circuitry 106 may include switches, filters, amplifiers, etc. to facilitate the communication with the wireless network. RF circuitry 106 may include a receive signal path which may include circuitry to down-convert RF signals received from the FEM circuitry 108 and provide baseband signals to the baseband circuitry 104. RF circuitry 106 may also include a transmit signal path which may include circuitry to up-convert baseband signals provided by the baseband circuitry 104 and provide RF output signals to the FEM circuitry 108 for transmission.

In some embodiments, the RF circuitry 106 may include a receive signal path and a transmit signal path. The receive signal path of the RF circuitry 106 may include mixer circuitry 106a, amplifier circuitry 106b and filter circuitry 106c. The transmit signal path of the RF circuitry 106 may include filter circuitry 106c and mixer circuitry 106a. RF circuitry 106 may also include synthesizer circuitry 106d for synthesizing a frequency for use by the mixer circuitry 106a of the receive signal path and the transmit signal path. In some embodiments, the mixer circuitry 106a of the receive signal path may be configured to down-convert RF signals received from the FEM circuitry 108 based on the synthesized frequency provided by synthesizer circuitry 106d. The amplifier circuitry 106b may be configured to amplify the down-converted signals and the filter circuitry 106c may be a low-pass filter (LPF) or band-pass filter (BPF) configured to remove unwanted signals from the down-converted signals to generate output baseband signals. Output baseband signals may be provided to the baseband circuitry 104 for further processing. In some embodiments, the output baseband signals may be zero-frequency baseband signals, although this is not a requirement. In some embodiments, mixer circuitry 106a of the receive signal path may comprise passive mixers, although the scope of the embodiments is not limited in this respect.

In some embodiments, the mixer circuitry 106a of the transmit signal path may be configured to up-convert input baseband signals based on the synthesized frequency provided by the synthesizer circuitry 106d to generate RF output signals for the FEM circuitry 108. The baseband signals may be provided by the baseband circuitry 104 and may be filtered by filter circuitry 106c. The filter circuitry 106c may include a low-pass filter (LPF), although the scope of the embodiments is not limited in this respect.

In some embodiments, the mixer circuitry 106a of the receive signal path and the mixer circuitry 106a of the transmit signal path may include two or more mixers and may be arranged for quadrature downconversion and/or upconversion respectively. In some embodiments, the mixer circuitry 106a of the receive signal path and the mixer circuitry 106a of the transmit signal path may include two or more mixers and may be arranged for image rejection (e.g., Hartley image rejection). In some embodiments, the mixer circuitry 106a of the receive signal path and the mixer circuitry 106a may be arranged for direct downconversion and/or direct upconversion, respectively. In some embodiments, the mixer circuitry 106a of the receive signal path and the mixer circuitry 106a of the transmit signal path may be configured for super-heterodyne operation.

In some embodiments, the output baseband signals and the input baseband signals may be analog baseband signals, although the scope of the embodiments is not limited in this respect. In some alternate embodiments, the output baseband signals and the input baseband signals may be digital baseband signals. In these alternate embodiments, the RF circuitry 106 may include analog-to-digital converter (ADC) and digital-to-analog converter (DAC) circuitry and the baseband circuitry 104 may include a digital baseband interface to communicate with the RF circuitry 106.

In some dual-mode embodiments, a separate radio IC circuitry may be provided for processing signals for each spectrum, although the scope of the embodiments is not limited in this respect.

In some embodiments, the synthesizer circuitry 106d may be a fractional-N synthesizer or a fractional N/N+1 synthesizer, although the scope of the embodiments is not limited in this respect as other types of frequency synthesizers may be suitable. For example, synthesizer circuitry 106d may be a delta-sigma synthesizer, a frequency multiplier, or a synthesizer comprising a phase-locked loop with a frequency divider.

The synthesizer circuitry 106d may be configured to synthesize an output frequency for use by the mixer circuitry 106a of the RF circuitry 106 based on a frequency input and a divider control input. In some embodiments, the synthesizer circuitry 106d may be a fractional N/N+1 synthesizer.

In some embodiments, frequency input may be provided by a voltage controlled oscillator (VCO), although that is not a requirement. Divider control input may be provided by either the baseband circuitry 104 or the applications processor 102 depending on the desired output frequency. In some embodiments, a divider control input (e.g., N) may be determined from a look-up table based on a channel indicated by the applications processor 102.

Synthesizer circuitry 106d of the RF circuitry 106 may include a divider, a delay-locked loop (DLL), a multiplexer and a phase accumulator. In some embodiments, the divider may be a dual modulus divider (DMD) and the phase accumulator may be a digital phase accumulator (DPA). In some embodiments, the DMD may be configured to divide the input signal by either N or N+1 (e.g., based on a carry out) to provide a fractional division ratio. In some example embodiments, the DLL may include a set of cascaded, tunable, delay elements, a phase detector, a charge pump and a D-type flip-flop. In these embodiments, the delay elements may be configured to break a VCO period up into Nd equal packets of phase, where Nd is the number of delay elements in the delay line. In this way, the DLL provides negative feedback to help ensure that the total delay through the delay line is one VCO cycle.

In some embodiments, synthesizer circuitry 106d may be configured to generate a carrier frequency as the output frequency, while in other embodiments, the output frequency may be a multiple of the carrier frequency (e.g., twice the carrier frequency, four times the carrier frequency) and used in conjunction with quadrature generator and divider circuitry to generate multiple signals at the carrier frequency with multiple different phases with respect to each other. In some embodiments, the output frequency may be a LO frequency (fLO). In some embodiments, the RF circuitry 106 may include an IQ/polar converter.

FEM circuitry 108 may include a receive signal path which may include circuitry configured to operate on RF signals received from one or more antennas 110, amplify the received signals and provide the amplified versions of the received signals to the RF circuitry 106 for further processing. FEM circuitry 108 may also include a transmit signal path which may include circuitry configured to amplify signals for transmission provided by the RF circuitry 106 for transmission by one or more of the one or more antennas 110.

In some embodiments, the FEM circuitry 108 may include a TX/RX switch to switch between transmit mode and receive mode operation. The FEM circuitry may include a receive signal path and a transmit signal path. The receive signal path of the FEM circuitry may include a low-noise amplifier (LNA) to amplify received RF signals and provide the amplified received RF signals as an output (e.g., to the RF circuitry 106). The transmit signal path of the FEM circuitry 108 may include a power amplifier (PA) to amplify input RF signals (e.g., provided by RF circuitry 106), and one or more filters to generate RF signals for subsequent transmission (e.g., by one or more of the one or more antennas 110.

In some embodiments, the UE device 100 may include additional elements such as, for example, memory/storage, display, camera, sensor, and/or input/output (I/O) interface.

In accordance with various embodiments described herein, techniques can be employed to facilitate uplink licensed assisted access (LAA) for unlicensed band operation. In accordance with various aspects discussed herein, multiple detailed design options for LAA uplink are provided to address scheduling of UEs for uplink transmission. In accordance with techniques disclosed herein, each UE can perform LBT (listen before talk), and multiple UEs can be scheduled in a given subframe, for example, by frequency division multiplexing, code division multiplexing, etc. In various aspects, techniques associated with LBT and uplink reception are provided. These aspects include techniques that facilitate: uplink access TDD (time division duplexing) and FDD (frequency division duplexing) with frequency multiplexing; uplink access TDD and FDD with uplink LBT; detection of uplink frame presence at an eNB; etc.

Various embodiments disclosed herein can provide better compliance to regulations regarding LBT (e.g., ETSI (European Telecommunications Standards Institute) regulations, etc.), and also improves the efficiency for small packet transmission, allowing multiple UEs to be scheduled in a given subframe.

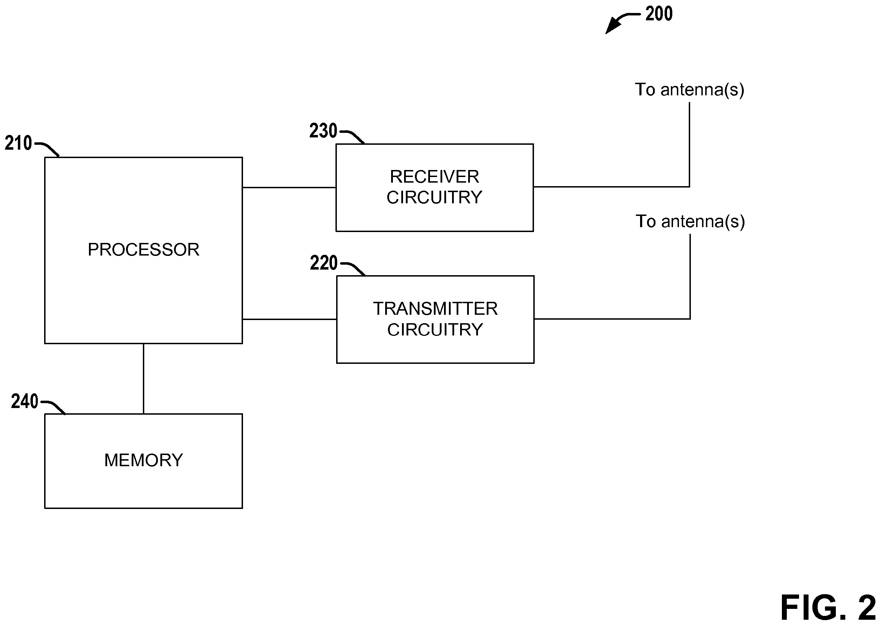

Referring to **FIG. 2****,** illustrated is a block diagram of a system 200 that facilitates uplink LAA unlicensed band operation of one or more UEs according to various aspects described herein. System 200 can include a processor 210, transmitter circuitry 220, receiver circuitry 230, and memory 240. In various aspects, system 200 can be included within an Evolved Universal Terrestrial Radio Access Network (E-UTRAN) Node B (Evolved Node B, eNodeB, or eNB) or other base station in a wireless communications network. As described in greater detail below, system 200 can facilitate LBT and multiplexing of one or more UEs for uplink LAA operation in an unlicensed frequency band.

Processor 210 can determine LBT parameters for the one or more UEs to operate in the unlicensed frequency band. These LBT parameters can include one or more of a carrier sensing duration, a backoff duration, a backoff window size, etc. In aspects, the LBT parameters can include a time to begin channel sensing in accordance with an LBT procedure, such as specifying one or more specific symbols during which a UE should begin channel sensing (e.g., the last N symbols before/after a scheduled PUSCH transmission via uplink grant, an uplink pilot time slot (UpPTS) of a special subframe in TDD embodiments, etc.). To increase the likelihood of a successful LBT procedure by the one or more UEs, the eNB can ensure that it is not transmitting during the specified symbols. Some or all of the LBT parameters can be common parameters to be employed by all of the one or more UEs (e.g., a common carrier sensing duration, a common backoff duration, a common backoff window size, a common time to begin channel sensing, etc.), which can facilitate multiplexing of the UEs. Processor 210 can also one or more schedule uplink grants in the unlicensed frequency band for at least a subset of the one or more UEs. The subset of the one or more UEs can be scheduled to a set of resources (e.g., one or more resource blocks, etc.) in the unlicensed frequency band. In aspects, at most one of the scheduled UEs (e.g., no UEs or one UE) can be scheduled to each resource block of the set of resources.

Transmitter circuitry 220 can transmit the LBT parameters and the one or more uplink grants to the one or more UEs. In various aspects, the LBT parameters can be transmitted via a physical downlink control channel (PDCCH), a physical broadcast channel (PBCH), a physical downlink shared channel (PDSCH), etc. The uplink grants can be transmitted via PDCCH or enhanced PDCCH (ePDCCH). In some aspects, transmitter circuitry 220 can send the LBT parameters and/or notifications of the uplink grants to the one or more UEs via a licensed frequency band (e.g., in some FDD embodiments, in some TDD embodiments, etc.), while in other aspects, the unlicensed frequency band employed for uplink signals can be used (e.g., in some TDD embodiments), or another distinct unlicensed frequency band can be employed or a distinct carrier in the unlicensed frequency band employed for uplink signals (e,g, in some FDD embodiments or some TDD embodiments, etc.).

Receiver circuitry 230 can receive signals transmitted over the unlicensed frequency band during the resources associated with the scheduled uplink grants. Because the one or more UEs may not have been able to transmit over the scheduled resources (e.g., an LBT procedure indicated the channel was occupied, etc.), the signals received by receiver circuitry 230 over those resources may not be from the one or more UEs. Thus, in some aspects, for a given UE, receiver circuitry 230 can perform blind detection on the received signals to determine whether a frame was sent by the UE, and if the frame was not detected, the signal can be ignored, while if the frame was detected, the signal can be decoded as the received signal from the UE. In the same or other aspects, the UE can be configured to transmit an indication via a licensed frequency band in response to successful transmission during the scheduled resources, and the signal can be decoded or disregarded based on whether such a notification was received or not.

Memory 240 can include instructions that can be implemented by processor 210, transmitter circuitry 220, and/or receiver circuitry 230 to implement various aspects described herein.

In some aspects, processor 210 can implement an LBT procedure on the unlicensed frequency band to be employed for uplink signals. In accordance with this procedure, receiver circuitry 230 can monitor the unlicensed frequency band to determine whether the unlicensed frequency band is clear. In response to the unlicensed frequency band being clear, transmitter circuitry 220 can transmit the scheduled uplink grants (e.g., via downlink control information (DCI), etc.) to the scheduled UEs. Optionally, this can be preceded by transmitter circuitry 220 transmitting a signal (e.g., a RTS/CTS (request to send/clear to send) signal, etc.) reserving the channel for long enough (e.g., 8ms, etc.) to transmit the scheduled uplink grants (e.g., via downlink control information (DCI), etc.) and for the one or more UEs to transmit during the scheduled resources.

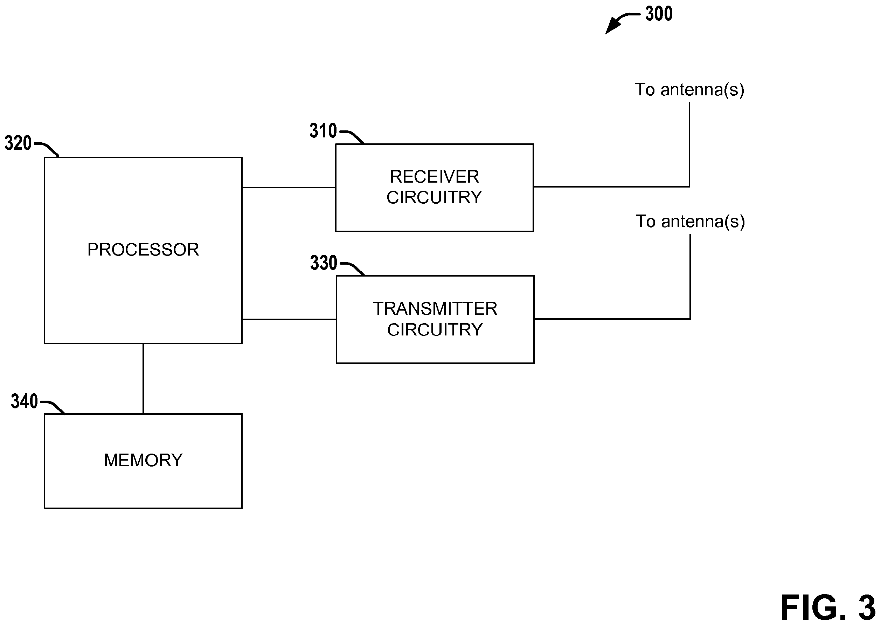

Referring to **FIG. 3****,** illustrated is a block diagram of a system 300 that facilitates uplink LAA unlicensed band operation of a UE according to various aspects described herein. System 300 can include receiver circuitry 310, a processor 320, transmitter circuitry 330, and memory 340. In various aspects, system 300 can be included within a user equipment (UE). As described in greater detail below, system 300 can facilitate LBT and uplink LAA operation of the UE in an unlicensed frequency band.

Receiver circuitry 310 can receive from an eNB a set of LBT parameters associated with an unlicensed frequency band. The set of LBT parameters can include parameters such as a carrier sensing duration, a backoff duration, a backoff window size, indication of when to begin an LBT procedure, etc. The set of LBT parameters can be received over any of a variety of physical channels (e.g., PDCCH, PBCH, PDSCH, etc.), and can be transmitted over a licensed frequency band, the unlicensed frequency band, or a second distinct unlicensed frequency band. Additionally, receiver circuitry 230 can receive one or more uplink grants, indicating resources over which the UE is scheduled to transmit via the unlicensed frequency band.

Processor 320 can also implement an LBT procedure based on the LBT parameters. In accordance with the LBT procedure, receiver circuitry 310 can perform channel sensing to determine if the unlicensed frequency band (or, in some aspects, a subset thereof associated with the scheduled resources) is clear, which can comprise monitoring the unlicensed frequency band for potentially interfering signals above a threshold power. Because, as discussed elsewhere herein, other UEs also can receive common LBT parameters, the likelihood of a potentially interfering signal being received from other UEs in communication with the eNB is substantially reduced, although receiver circuitry 310 may receive potentially interfering signals from other sources (e.g., WiFi, etc.). Additionally, processor 320 can generate an uplink data signal for transmission to the eNB via a physical uplink shared channel (PUSCH).

In response to receiver circuitry 310 detecting no potentially interfering signals above the threshold power, transmitter circuitry 330 can transmit the uplink data signal in the unlicensed frequency band via the scheduled resources, which can be preceded by an uplink reservation signal (e.g., RTS/CTS). In some aspects, transmitter circuitry 330 can additionally transmit a successful transmission signal via a licensed frequency band that indicates that transmitter circuitry 330 was able to transmit during the scheduled uplink grant.

However, if, in accordance with the LBT procedure, receiver circuitry 310 detects at least one signal above the threshold power, processor 320 can implement a backoff procedure. In accordance with the backoff procedure, receiver circuitry 310 monitors the channel until it is clear, and after an additional period of time based on the LBT parameters, transmitter circuitry 330 can transmit during some or all of the scheduled resources if possible. If the scheduled resources have already elapsed, transmitter circuitry 330 can wait until a next scheduled uplink grant.

In some aspects, in accordance with the implemented LBT procedure, receiver circuitry 310 can monitor only a subset of the channel associated with the scheduled resources, such as frequency domain resources or code domain resources. When the monitored resources (e.g., code domain resources, frequency domain resources, etc.) are clear, transmitter circuitry 330 can transmit the uplink data signal via the scheduled resources, assuming that the scheduled uplink grant(s) have not elapsed (e.g., because processor 320 implemented a backoff procedure due to a potentially interfering signal above the threshold power).

In various aspects, the set of LBT parameters can specify when processor 320 implements the LBT procedure, such as by specifying one or more symbols (e.g., the last N symbols) of a subframe preceding the uplink grant(s). As another example, in a TDD embodiment wherein a special subframe can be included as a transition between downlink and uplink transmissions, the LBT procedure can be implemented by processor 320 during a portion of the special subframe (e.g., during an uplink pilot timeslot, etc.).

Memory 340 can include instructions that can be implemented by receiver circuitry 310, processor 320, and/or transmitter circuitry 330 to implement various aspects described herein.

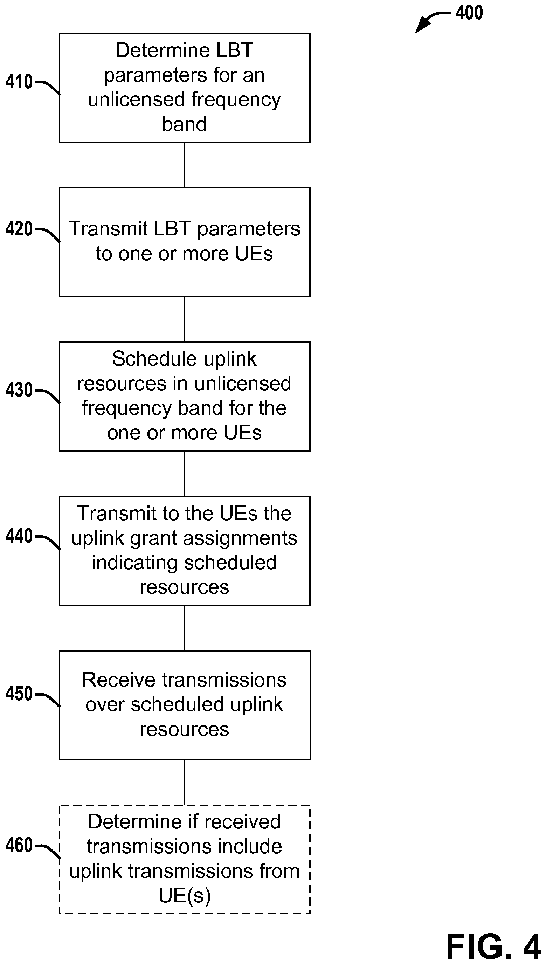

Referring to **FIG. 4****,** illustrated is a flow diagram of a method 400 that facilitates uplink LAA unlicensed band operation of one or more UEs according to various aspects described herein. In various aspects, method 400 can be implemented by an Evolved Universal Terrestrial Radio Access Network (E-UTRAN) Node B (Evolved Node B, eNodeB, or eNB) or other base station in a wireless communications network.

At 410, method 410 can include determining a set of LBT parameters to be employed by one or more UEs for operation in an unlicensed frequency band. The set of LBT parameters can include a carrier sense duration, a backoff duration, a backoff window size, when to implement an LBT procedure, etc. In aspects, some or all of the LBT parameters can be common parameters employed by each of the one or more UEs, which can minimize conflicts between the one or more UEs, and facilitate multiplexing of uplink data signals from the one or more UEs.

At 420, the set of LBT parameters can be transmitted to the one or more UEs, which can be via the unlicensed frequency band, via a distinct second unlicensed frequency band, via a licensed frequency band, etc. As discussed herein, any of a variety of physical channels can be employed to transmit the LBT parameters in a variety of ways. For example, for PDCCH (or ePDCCH) transmission of LBT parameters, a new DCI (downlink control information) format can be defined and employed to specify the LBT parameters. As an alternative example, the set of LBT parameters can be configured via RRC (radio resource control) and can be semi-statically configured.

At 430, uplink resources can be scheduled for the one or more UEs to transmit uplink signals via the unlicensed frequency band. The one or more UEs can be multiplexed in a variety of ways, such as code division multiplexing, frequency division multiplexing, etc. Additionally, code and/or frequency domain resources can be reused, with a first UE scheduled to transmit in the resources during a first time period (assuming a successful LBT procedure at the first UE), a second UE scheduled to transmit in the resources during a second time period (assuming a successful LBT procedure at the second UE, wherein the LBT procedure of the second UE can be scheduled to be implemented after the scheduled uplink grant for the first UE), etc. In aspects, at least a threshold amount of frequency resources can be scheduled, to comply with a set of regulations (e.g., ETSI regulations provide for occupying at least 80% of the channel, etc.).

At 440, one or more uplink grants can be transmitted to the one or more UEs, indicating the scheduled uplink resources.

At 450, one or more transmissions can be received over the scheduled uplink resources.

At 460, optionally, a determination can be made as to whether the one or more transmissions received at 450 include uplink transmissions from the one or more UEs. For example, a successful transmission signal can be received over a licensed frequency band that indicates that an associated UE successfully transmitted during the scheduled uplink resources. As an alternative example, blind decoding can be performed on the received transmission to determine if they comprise a transmission from a scheduled UE.

Various embodiments disclosed herein can take into account and comply with various LBT regulations for unlicensed band operation, such as proposed ETSI EN (Harmonized European Standard) 301 893, which specifies that:
1. Before a transmission or a burst of transmissions on an Operating Channel, the equipment [can] perform a Clear Channel Assessment (CCA) check using "energy detect". The equipment [can] observe the Operating Channel(s) for the duration of the CCA observation time which [can] be not less than 20 µs. The CCA observation time used by the equipment [can] be declared by the manufacturer. The Operating Channel [can] be considered occupied if the energy level in the channel exceeds the threshold corresponding to the power level given in point 5 below. If the equipment finds the channel to be clear, it may transmit immediately (see point 3 below).
2. If the equipment finds an Operating Channel occupied, it [might] not transmit in that channel. The equipment [can] perform an Extended CCA check in which the Operating Channel is observed for the duration of a random factor N multiplied by the CCA observation time. N defines the number of clear idle slots resulting in a total Idle Period that [can] be observed before initiation of the transmission. The value of N [can] be randomly selected in the range 1..q every time an Extended CCA is [to be performed] and the value stored in a counter. The value of q [can be] selected by the manufacturer in the range 4..32. This selected value [can] be declared by the manufacturer (see clause 5.3.1 q)). The counter [can be] decremented every time a CCA slot is considered to be "unoccupied". When the counter reaches zero, the equipment may transmit.
3. The Nominal Channel Bandwidth is the widest band of frequencies, inclusive of guard bands, assigned to a single channel. The Occupied Channel Bandwidth [can be] the bandwidth containing 99 % of the power of the signal. The Occupied Channel Bandwidth [can] be between 80 % and 100 % of the declared Nominal Channel Bandwidth. During an established communication, a device is allowed to operate temporarily in a mode where its Occupied Channel Bandwidth may be reduced to as low as 40 % of its Nominal Channel Bandwidth with a minimum [that can be] 4 MHz.

Any transmitter in the system can adhere to the LBT regulations before any data transmission in order to comply with these conditions.

There are two possible scenarios for the uplink, TDD and FDD. In the TDD scenario, the unlicensed carrier is used for both downlink and uplink transmissions. In the FDD scenario, the unlicensed band can use one carrier for downlink and a separate carrier (e.g., of 20 MHz) for uplink.

In accordance with aspects discussed herein, there are multiple design choices of different embodiments for each of these scenarios.

In the TDD frame structure, a special sub-frame is present for the downlink to uplink transition. The special subframe consists of three fields: DwPTS (Downlink Pilot Time Slot), GP (Guard Period), and UpPTS (Uplink Pilot Time Slot). This special subframe mainly consists of downlink transmission and small durations of GP and UpPTS. As used herein, this special subframe is regarded as a downlink sub-frame.

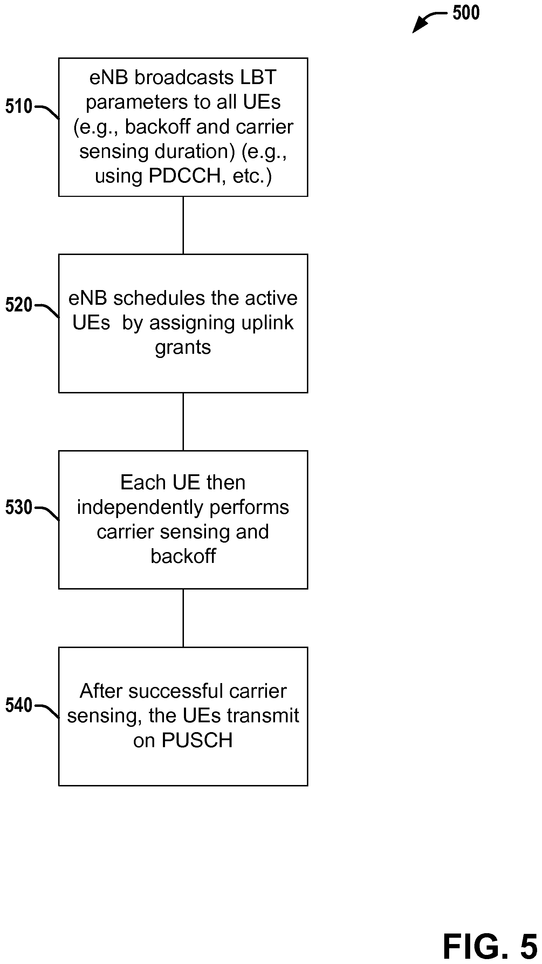

Referring to **FIG. 5****,** illustrated is a flow diagram of a method 500 uplink access in a licensed assisted access (LAA) wireless system. The eNB can act as a coordinator for the UEs for the uplink listen before talk. Specifically, LBT involves each UE (or transmitter) following a carrier sensing and a backoff process before any transmission. At 510, the eNB can broadcast LBT parameters including carrier sensing duration, backoff duration and/or backoff window size in PDCCH, PBCH, PDSCH, or other channels. When PDCCH is used, a new DCI format can be defined to carry the LBT related parameters. At 520, the eNB can schedule UEs (e.g., using existing PDCCH (or ePDCCH) mechanisms) and allocate resources for the uplink sub-frame. The allocated resources can be one subframe or a set of subframes.

At 530, each UE can independently perform LBT, wherein each can UE perform carrier sensing and extended CCA using the parameters provided by the eNB. If the channel is sensed idle, the UE can send a reservation signal (e.g., RTS/CRS) for the remaining sub-frame duration. At 540, the UE can start transmitting data on the PUSCH in the next sub-frame. If no resources are available in the next sub-frame, for example, because CCA/extended CCA are not complete, the UE does not transmit.

Possible frame configurations for TDD and FDD frame structures are discussed herein. Uplink grants can be transmitted over either the licensed carrier (cross-carrier scheduling) or over the unlicensed carrier (self-scheduling).

The gap between the end of the subframe carrying a UL scheduling grant and the beginning of the subframe carrying the corresponding PUSCH is assumed to be 4ms in the examples provided herein; however, embodiments disclosed herein can be employed with other values, as well. Accordingly, any PDCCH (or ePDCCH) transmission can be decoded and its corresponding action (such as data preparation for uplink, etc.) can be completed within 3 ms. This implies that DL (e)PDCCH and corresponding UL should be separated by at least 4 sub-frames. Furthermore, in TDD embodiments, frequent switching between DL and UL frames is undesirable due to LBT overhead resulting from shorter transmission times.

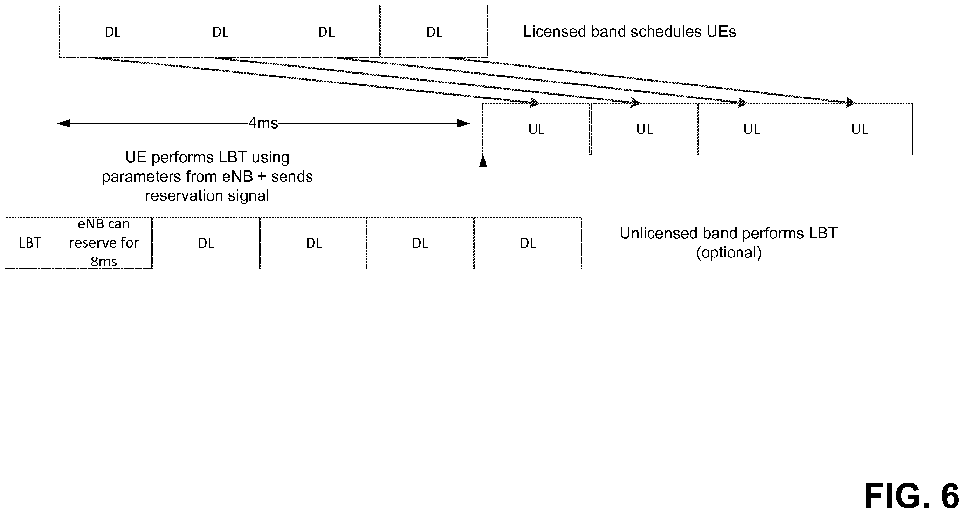

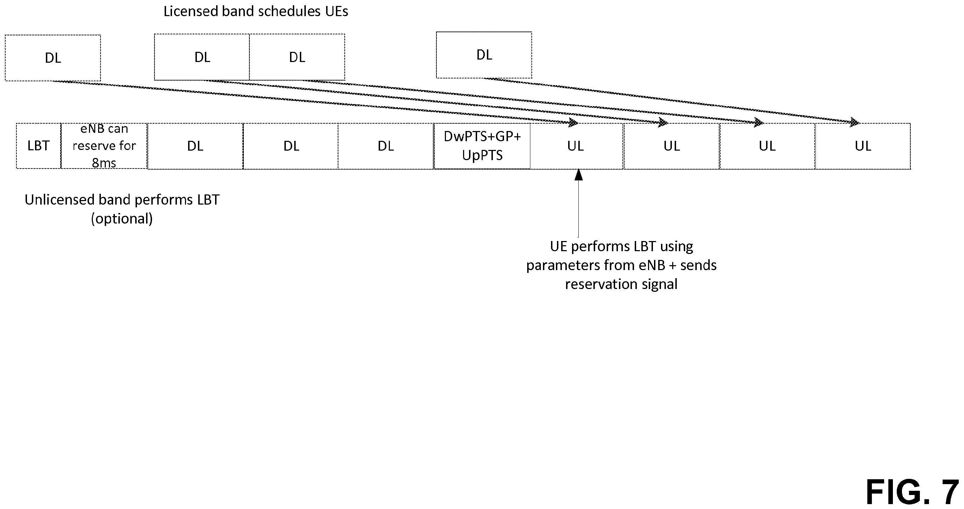

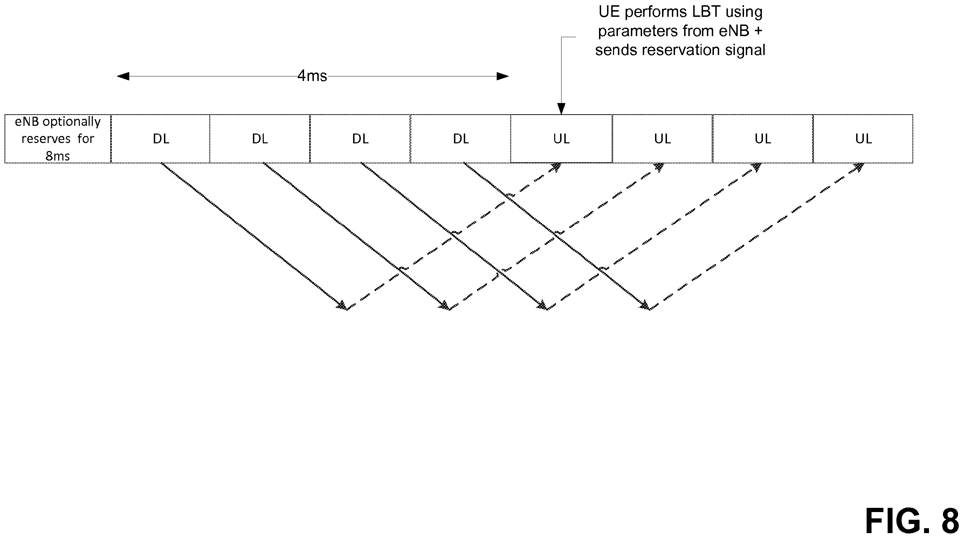

**FIG. 6** illustrates an example operation of an uplink design in a FDD system in accordance with various aspects disclosed herein, and **FIG. 7** illustrates an example operation of an uplink design in a TDD system in accordance with various aspects disclosed herein. Optionally, in the downlink, the eNB can reserve the unlicensed band channel for a duration at least long enough to cover the total downlink and uplink transmission in the unlicensed band. The eNB can transmit LBT parameters to be used by the UEs. The UEs can perform LBT using the parameters provided by the eNB, and can perform channel reservation to prepare for the transmission in the remaining subframes. While the overall TDD and FDD structure have similar architectures, in TDD there is an additional constraint of maintaining the TDD configurations. The TDD configurations for the unlicensed band and the licensed band can be different. In the TDD configuration, if the UEs are scheduled by cross-carrier scheduling, the UL grant on the unlicensed carrier can be indicated by the previous DL frames, closest to the UL frames and separated by at-least 4ms. Referring to **FIG. 8**, illustrated is a proxy figure showing the general techniques of uplink LAA for either FDD or TDD embodiments according to various aspects disclosed herein.

In general, for uplink access in unlicensed band operation, it is not conventionally possible to multiplex UEs in the frequency domain for multiple reasons. First, UEs can start transmission at different times due to different backoffs used in LBT procedures. Second, if any of the UEs start transmitting, it is unlikely that any other UE will sense that the channel is clear, thus, the transmission of any other UE will be unlikely. Third, ETSI regulations set a minimum allowed percentage of the bandwidth that is to be occupied by any transmitter of 80% of the nominal bandwidth (although 40% is allowed for established connections).

In order to address the first two factors, various embodiments discussed herein can implement multiple techniques to facilitate multiplexing UEs for uplink access.

First, the eNB can transmit a single backoff number to be followed by the UEs expected to be scheduled in the current transmission opportunity. In other words, a single common backoff number can be applied to a group of UEs. This technique can facilitate UEs in the same collision domain to have a clear channel signal at the same time, resulting in simultaneous channel access. Note that, contrary to conventional LBT implementations, wherein a random backoff is chosen by the UE to avoid collisions, embodiments described herein can have all UEs employ the same backoff deterministically to ensure that a collision occurs, since they can be separated in the frequency domain (or code domain, etc.).

Second, the eNB grants can be selected to ensure that the UEs can be scheduled to different resource blocks to avoid collision of the transmissions from the scheduled UEs. It is also likely that the carrier sensing of UEs (which is not, in general, closely co-located) can have different ending times for extended CCA (or backoff). Thus, in various embodiments disclosed herein, the eNB can be responsible for minimizing underutilization of resources.

To address the third factor, the resource blocks for all of the UEs can be spread across the bandwidth (e.g., of 20 MHz) to adhere to the ETSI standard regulations. There are multiple options for ensuring that the bandwidth is occupied.

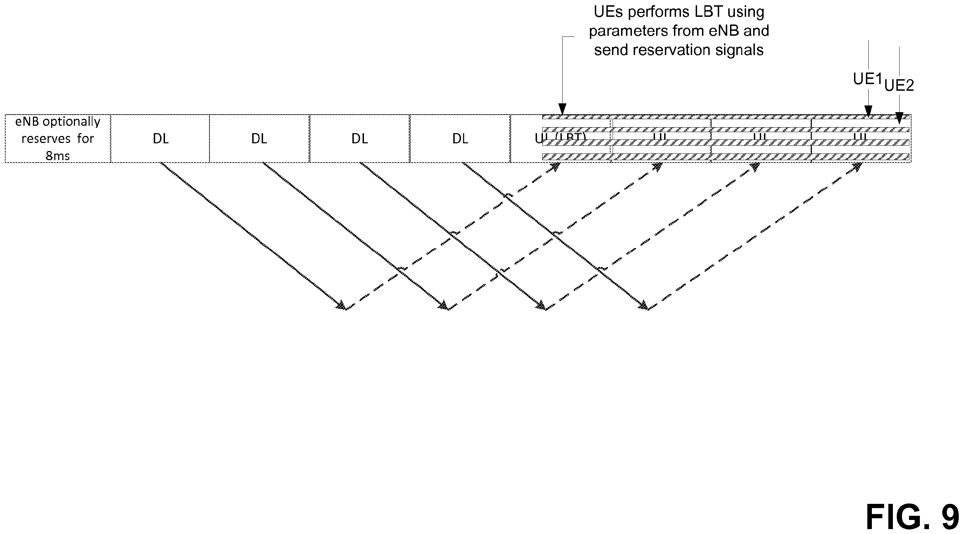

In a first option, illustrated in **FIG. 9****,** UEs can be multiplexed in the frequency domain by assigning them to different resource blocks (RBs). With an 80% nominal bandwidth minimum (e.g., per ETSI, etc.), UEs can be scheduled near the edges of the allocated 20 MHz. Allowing for a 10% guard band, about 2 MHz (10% of 20 MHz) bandwidth at the edges can be occupied by UEs. This restricts the number of UEs with this scheme to 5 (=2 MHz/2/180 kHz).

In this first option, if any of the UEs (e.g., a first UE) completes its transmission before other UEs in the UL burst, it is possible to reuse the resources of the first UE and allocate them to other UEs. Other UEs can include existing UEs for which transmission is ongoing, a new set of UEs, or a combination thereof. The eNB can indicate to the UEs whether to perform LBT. In this first option, LBT can be performed only on the frequency resources indicated by the eNB so that, for the purposes of the sensing, the newly scheduled UE can eliminate the frequencies for which ongoing transmission is happening.

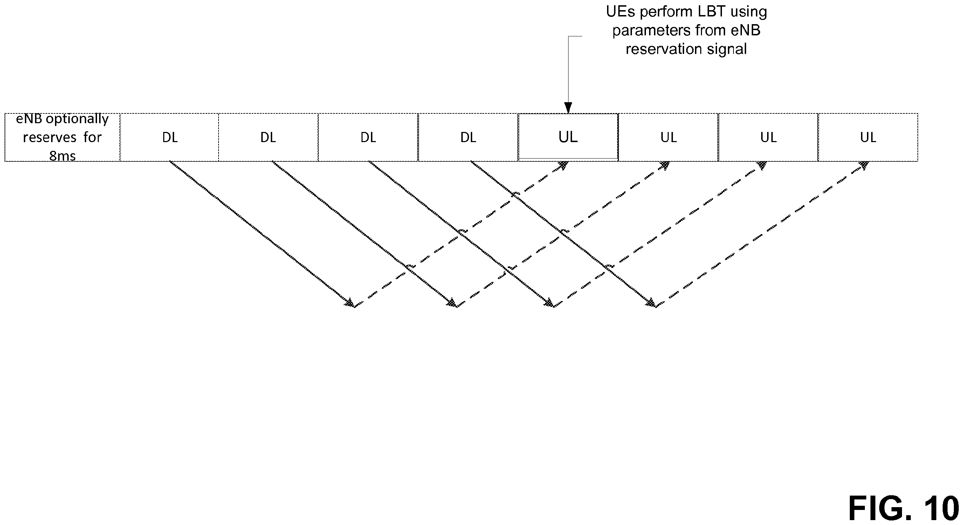

In a second option, illustrated in **FIG. 10****,** all of the scheduled UEs can occupy the entire bandwidth by spreading the data for the scheduled UEs using orthogonal codes. The number of users that can be supported in this scheme depend on the channel and the properties of the orthogonal codes. As a specific example, 12 UEs can be assigned in a subframe, wherein each UE can occupy the entire BW, e.g., all the PRBs (physical RBs) available for PUSCH transmissions. Then, different orthogonal codes (e.g., Hadamard codes or DFT (discrete Fourier transform)-precoding) can be used for the PDSCHs of each UE. For instance, when orthogonal codes of length 12 are used, each symbol of one UE can be spread using the code assigned to the UE and then the spreaded data symbols can be mapped to each frequency subcarrier, wherein each symbol can be one DFT output symbol following the conventional LTE uplink transmitter chain.

In this second option, if any of the UEs (e.g., a first UE) completes its transmission before other UEs in the UL burst, it is possible to reuse the resources of the first UE and allocate them to one or more other UEs. These other UEs can include existing UEs for which transmission is ongoing, a new set of UEs, or a combination thereof. The eNB can indicate to the UEs whether to perform LBT. In this second option, LBT can be performed only on the code domain resources indicated by the eNB so that, for the purposes of the sensing, the newly scheduled UE can eliminate the resources for which ongoing transmission is happening. In this option, the newly scheduled UE can perform sensing by correlating the received signal with the code indicated by the eNB.

In various aspects, for uplink transmission using synchronous LBT, if any UE completes extended CCA before the start of the next sub-frame, that UE does not transmit until the start of the next sub-frame. Further, in some embodiments, the UE can retransmit reservation signals, increasing network overhead. Thus, in aspects, one or more optimizations can be employed so that the sub-frame alignment can be performed using the channel sensing conducted in a previous sub-frame. This technique can significantly improve performance, particularly in lightly loaded systems. In order to implement this, the trailing symbols of the preceding subframe can be be punctured. During the punctured symbols, LBT can be performed, and if the LBT is complete before the next subframe starts, the next subframe can be used for the PUSCH transmission.

In any predefined set of sub-frames, the transmitter (e.g., UE) can perform channel sensing and backoff in the last or first K symbols.

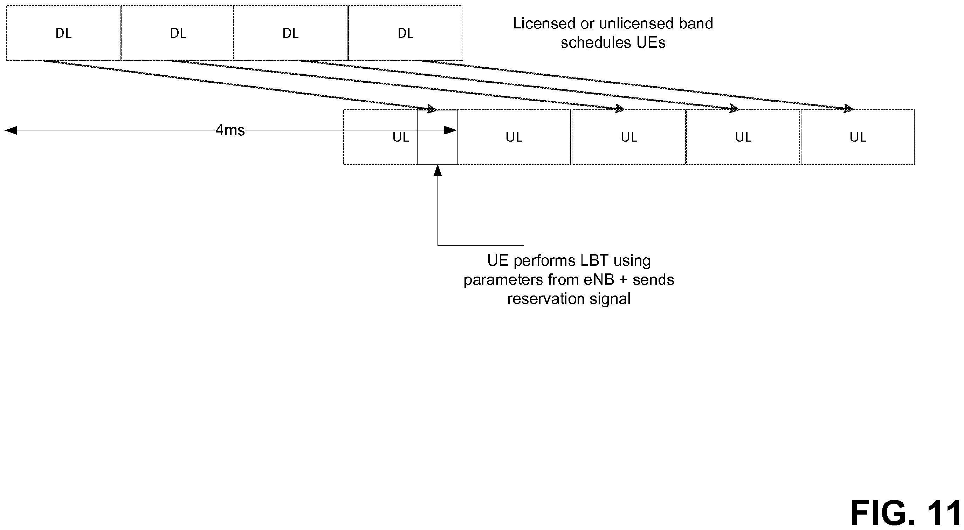

In an FDD example, all scheduled UEs can be informed about the exact locations of the symbols over which the UEs should start sensing. For example, as illustrated in **FIG. 11****,** LBT optimization in a FDD system can utilize K symbols of a preceding subframe to perform LBT according to various aspects disclosed herein. A new DCI can be defined to determine the symbols. In another embodiment, the symbols for sensing can be carried through PBCH or PDSCH in a cell-specific manner or manner specific to a group of UEs. If a new DCI is used, possible DCI design can include a bit-map of B (wherein B is up to 14) bits, indicating the positions of the punctured symbols. For uplink, the UEs can start sensing before the start of the expected uplink frame, in the expectation that the UE might be scheduled in the following subframe.

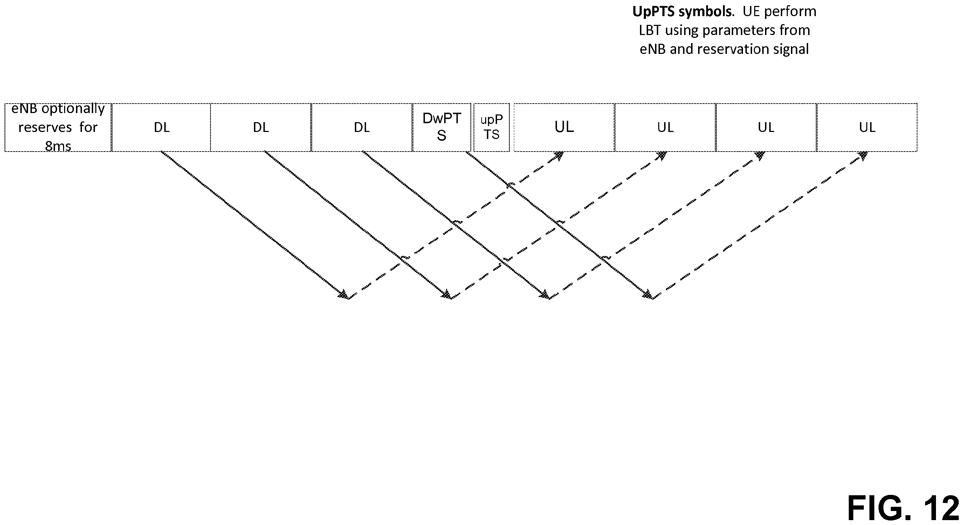

In the TDD case, illustrated in **FIG. 12****,** showing LBT optimization for a TDD system according to aspects disclosed herein, the uplink pilot time slot (UpPTS) symbols can be used for channel sensing.

It is possible that the uplink LBT operation can interfere with normal reception at the eNB. In licensed operation, whenever an uplink grant is scheduled, the eNB expects to receive the PUSCH data at the specified resource location. In the event that the UE does not gain access to the channel and does not transmit (e.g., because a channel is not clear due to a transmitting WiFi near a UE, etc.), the received signal could be incorrectly stored in the HARQ buffer for the corresponding UE, possibly degrading the decoder performance severely. In various aspects, one of multiple options can be employed to mitigate this problem. In accordance with a first option, the eNB can perform blind detection of uplink RS signals to determine whether a frame has been sent by the UE. If the frame is not detected, then the received signal can be disregarded. In accordance with a second option, the UE can signal the eNB via the licensed carrier (e.g., with some successful transmission signal) to indicate whether the data was sent over the unlicensed carrier.

Examples herein can include subject matter such as a method, means for performing acts or blocks of the method, at least one machine-readable medium including executable instructions that, when performed by a machine (e.g., a processor with memory, an application-specific integrated circuit (ASIC), a field programmable gate array (FPGA), or the like) cause the machine to perform acts of the method or of an apparatus or system for concurrent communication using multiple communication technologies according to embodiments and examples described.

The above description of illustrated embodiments of the subject disclosure, including what is described in the Abstract, is not intended to be exhaustive or to limit the disclosed embodiments to the precise forms disclosed. While specific embodiments and examples are described herein for illustrative purposes, various modifications are possible that are considered within the scope of such embodiments and examples, as those skilled in the relevant art can recognize.

In this regard, while the disclosed subject matter has been described in connection with various embodiments and corresponding Figures, where applicable, it is to be understood that other similar embodiments can be used or modifications and additions can be made to the described embodiments for performing the same, similar, alternative, or substitute function of the disclosed subject matter without deviating therefrom. Therefore, the disclosed subject matter should not be limited to any single embodiment described herein, but rather should be construed in breadth and scope in accordance with the appended claims below.

In particular regard to the various functions performed by the above described components or structures (assemblies, devices, circuits, systems, etc.), the terms (including a reference to a "means") used to describe such components are intended to correspond, unless otherwise indicated, to any component or structure which performs the specified function of the described component which performs the function in the herein illustrated exemplary implementations. In addition, while a particular feature may have been disclosed with respect to only one of several implementations, such feature may be combined with one or more other features of the other implementations as may be desired and advantageous for any given or particular application.

## Claims

1. A method, comprising:
determining (410), by an Evolved NodeB, eNB, for one or more user equipments, UEs, a set of listen before talk, LBT, parameters associated with an unlicensed frequency band, wherein the set of LBT parameters comprises a common carrier sensing duration for the one or more UEs and a common backoff duration for the one or more UEs; and
determining (430), by the eNB, at least one uplink grant in the unlicensed frequency band for at least one of the one or more UEs, said uplink grant associated with resources comprising one or more resource blocks, wherein the at least one uplink grant schedules at most one of the one or more UEs to each of the one or more resource blocks;
transmitting (440), by the eNB, the set of LBT parameters and the at least one uplink grant:
performing, by each of the UEs, carrier sensing and a backoff process based in the LBT parameters before any transmissions; and
receiving (450), by the eNB, transmissions over said resources associated with the at least one uplink grant.

2. The method of claim 1, wherein the set of LBT parameters and the at least one uplink grant are transmitted via a second frequency band distinct from the unlicensed frequency band via frequency division duplexing, FDD.

3. The method of claim 2, wherein the second frequency band is a licensed frequency band.

4. The method of claim 1, wherein the transmitting is performed via the unlicensed frequency band via time division duplexing, TDD.

5. The method of claim 4, wherein the set of LBT parameters and the at least one uplink grant are transmitted by the eNB via the unlicensed frequency band.

6. The method of claim 4, wherein the set of LBT parameters and the at least one uplink grant are transmitted by the eNB via a second unlicensed frequency band distinct from the unlicensed frequency band.

7. The method of any of claims 1-2 or 4, further comprising determining whether the unlicensed frequency band is clear via an LBT procedure, wherein transmissions are received by the eNB over the unlicensed frequency band in accordance with the implemented LBT procedure, and wherein, in response to a determination that the unlicensed frequency band is clear, a reservation signal is transmitted by the eNB over the unlicensed frequency band, wherein the reservation signal reserves the unlicensed frequency band for potential transmission at the one or more UEs.

8. Machine readable media comprising instructions that, when executed by an evolved NodeB, eNB, causes the evolved eNB to perform the following steps: determining, for one or more user equipments, UEs, a set of listen before talk, LBT, parameters associated with an unlicensed frequency band, wherein the set of LBT parameters comprises a common carrier sensing duration for the one or more UEs and a common backoff duration for the one or more UEs; determining, at least one uplink grant in the unlicensed frequency band for at least one of the one or more UEs, said uplink grant associated with resources comprising one or more resource blocks, wherein the at least one uplink grant schedules at most one of the one or more UEs to each of the one or more resource blocks; transmitting, the set of LBT parameters and the at least one uplink grant; receiving, by the eNB, transmissions over said resources associated with the at least one uplink grant.

## Patentansprüche

1. Verfahren, umfassend:
Bestimmen (410), durch einen Evolved NodeB, eNB, für ein oder mehrere Benutzergeräte, UEs, eines Satzes von Listen-before-Talk, LBT, Parametern, die mit einem unlizenzierten Frequenzband verknüpft sind, wobei der Satz von LBT-Parametern eine gemeinsame Träger-Abtastdauer für das eine oder die mehreren UEs und eine gemeinsame Backoff-Dauer für das eine oder die mehreren UEs umfasst; und
Bestimmen (430), durch das eNB, mindestens einer Uplink-Gewährung in dem unlizenzierten Frequenzband für mindestens eines der einen oder mehreren UEs, wobei die Uplink-Gewährung mit Ressourcen verknüpft ist, die einen oder mehrere Ressourcenblöcke umfassen, wobei die mindestens eine Uplink-Gewährung höchstens eines der einen oder mehreren UEs auf jeden der einen oder mehreren Ressourcenblöcke plant;
Übertragen (440), durch den eNB, des Satzes von LBT-Parametern und der mindestens einen Uplink-Gewährung;
Durchführen, durch jedes der UEs, von Träger-Abtastung und eines Backoff-Prozesses basierend in den LBT-Parametern vor jeglichen Übertragungen; und
Empfangen (450), durch den eNB, von Übertragungen über die Ressourcen, die mit der mindestens einen Uplink-Gewährung verknüpft sind.

2. Verfahren nach Anspruch 1, wobei der Satz von LBT-Parametern und die mindestens eine Uplink-Gewährung über ein zweites Frequenzband übertragen werden, das sich von dem unlizenzierten Frequenzband unterscheidet, mittels Frequenz-Duplexing, FDD.

3. Verfahren nach Anspruch 2, wobei das zweite Frequenzband ein lizenziertes Frequenzband ist.

4. Verfahren nach Anspruch 1, wobei das Übertragen über das unlizenzierte Frequenzband mittels Zeit-Duplexing, TDD, durchgeführt wird.

5. Verfahren nach Anspruch 4, wobei der Satz von LBT-Parametern und die mindestens eine Uplink-Gewährung durch den eNB über das unlizenzierte Frequenzband übertragen werden.

6. Verfahren nach Anspruch 4, wobei der Satz von LBT-Parametern und die mindestens eine Uplink-Gewährung von dem eNB über ein zweites unlizenziertes Frequenzband übertragen werden, das sich von dem unlizenzierten Frequenzband unterscheidet.

7. Verfahren nach einem der Ansprüche 1 bis 2 oder 4, ferner umfassend Bestimmen, ob das unlizenzierte Frequenzband frei ist, über eine LBT-Prozedur, wobei Übertragungen durch den eNB über das unlizenzierte Frequenzband gemäß der implementierten LBT-Prozedur empfangen werden, und wobei als Reaktion auf eine Bestimmung, dass das unlizenzierte Frequenzband frei ist, ein Reservierungssignal durch den eNB über das unlizenzierte Frequenzband übertragen wird, wobei das Reservierungssignal das unlizenzierte Frequenzband für potentielle Übertragung an das eine oder die mehreren UEs reserviert.

8. Maschinenlesbare Medien umfassend Anweisungen, die, wenn sie von einem Evolved NodeB, eNB, ausgeführt werden, den Evolved eNB veranlassen, die folgenden Schritte durchzuführen:
Bestimmen, für ein oder mehrere Benutzergeräte, UEs, eines Satzes von Listen-before-Talk, LBT, Parametern, die mit einem unlizenzierten Frequenzband verknüpft sind, wobei der Satz von LBT-Parametern eine gemeinsame Träger-Abtastdauer für das eine oder die mehreren UEs und eine gemeinsame Backoff-Dauer für das eine oder die mehreren UEs umfasst;
Bestimmen mindestens einer Uplink-Gewährung in dem unlizenzierten Frequenzband für mindestens eines der einen oder mehreren UEs, wobei die Uplink-Gewährung mit Ressourcen verknüpft ist, die einen oder mehrere Ressourcenblöcke umfassen, wobei die mindestens eine Uplink-Gewährung höchstens eines der einen oder mehreren UEs auf jeden der einen oder mehreren Ressourcenblöcke plant;
Übertragen des Satzes von LBT-Parametern und der mindestens einen Uplink-Gewährung;
Empfangen, durch den eNB, von Übertragungen über die Ressourcen, die mit der mindestens einen Uplink-Gewährung verknüpft sind.

## Revendications

1. Un procédé comprenant :
la détermination (410), par un nœud B évolué, eNB, pour un ou plusieurs équipements utilisateurs, UE, d'un ensemble de paramètres d'écoute de porteuse, LBT, associés à une bande de fréquences sans licence, dans lequel l'ensemble de paramètres LBT comprend une durée de détection de porteuse commune pour les un ou plusieurs UE et une durée de backoff commune pour les un ou plusieurs UE ; et
la détermination (430), par l'eNB, d'au moins un octroi de liaison montante dans la bande de fréquences sans licence pour au moins un des un ou plusieurs UE, ledit octroi de liaison montante étant associé à des ressources comprenant un ou plusieurs blocs de ressource, dans lequel l'au moins un octroi de liaison montante planifie au maximum un des un ou plusieurs UE sur chacun des un ou plusieurs blocs de ressource ;
la transmission (440), par l'eNB, de l'ensemble de paramètres LBT et de l'au moins un octroi de liaison montante ;
l'exécution, par chacun des UE, d'une détection de porteuse et d'un processus de backoff sur la base des paramètres LBT avant toute transmission ; et
la réception (450), par l'eNB, de transmissions sur lesdites ressources associées à l'au moins un octroi de liaison montante.

2. Le procédé selon la revendication 1, dans lequel l'ensemble de paramètres LBT et l'au moins un octroi de liaison montante sont transmis via une seconde bande de fréquences distincte de la bande de fréquences sans licence via un duplexage par répartition en fréquence, FDD.

3. Le procédé selon la revendication 2, dans lequel la seconde bande de fréquences est une bande de fréquences sous licence.

4. Le procédé selon la revendication 1, dans lequel la transmission est effectuée via la bande de fréquences sans licence via un duplexage par répartition dans le temps, TDD.

5. Le procédé selon la revendication 4, dans lequel l'ensemble de paramètres LBT et l'au moins un octroi de liaison montante sont transmis par l'eNB via la bande de fréquences sans licence.

6. Le procédé selon la revendication 4, dans lequel l'ensemble de paramètres LBT et l'au moins un octroi de liaison montante sont transmis par l'eNB via une seconde bande de fréquences sans licence distincte de la bande de fréquences sans licence.

7. Le procédé selon l'une quelconque des revendications 1-2 ou 4, comprenant en outre la détermination si la bande de fréquences sans licence est libre via une procédure LBT, dans lequel des transmissions sont reçues par l'eNB sur la bande de fréquences sans licence conformément à la procédure LBT mise en œuvre, et dans lequel, en réponse à une détermination que la bande de fréquences sans licence est libre, un signal de réservation est transmis par l'eNB sur la bande de fréquences sans licence, dans lequel le signal de réservation réserve la bande de fréquences sans licence pour une transmission potentielle au niveau des un ou plusieurs UE.

8. Un support lisible par machine comprenant des instructions qui, quand elles sont exécutées par un nœud B évolué, eNB, amènent l'eNB évolué à effectuer les étapes suivantes : la détermination, pour un ou plusieurs équipements utilisateurs, UE, d'un ensemble de paramètres d'écoute de porteuse, LBT, associés à une bande de fréquences sans licence, dans lequel l'ensemble de paramètres LBT comprend une durée de détection de porteuse commune pour les un ou plusieurs UE et une durée de backoff commune pour les un ou plusieurs UE ; la détermination d'au moins un octroi de liaison montante dans la bande de fréquences sans licence pour au moins un des un ou plusieurs UE, ledit octroi de liaison montante étant associé à des ressources comprenant un ou plusieurs blocs de ressource, dans lequel l'au moins un octroi de liaison montante planifie au maximum un des un ou plusieurs UE sur chacun des un ou plusieurs blocs de ressource ; la transmission de l'ensemble de paramètres LBT et de l'au moins un octroi de liaison montante ; la réception, par l'eNB, de transmissions sur lesdites ressources associées à l'au moins un octroi de liaison montante.
